# EUROPEAN PATENT SPECIFICATION

(11) **EP 3 796 239 B1**
(45) Date of publication and mention of the grant of the patent: **16.08.2023**
(21) Application number: 19198514.2
(22) Date of filing: 20.09.2019
(51) Int. Cl.: G06Q 10/06, G06Q 50/08, G05B 15/02

(54) **METHOD AND DEVICE FOR GENERATING A BUILDING AUTOMATION PROJECT**
VERFAHREN UND VORRICHTUNG ZUR ERZEUGUNG EINES GEBÄUDEAUTOMATISIERUNGSPROJEKTS
PROCÉDÉ ET DISPOSITIF POUR GÉNÉRER UN PROJET D'AUTOMATISATION DE BÂTIMENT

(43) Date of publication of application: 24.03.2021
(73) Proprietor: Siemens Schweiz AG, 8047 Zürich (CH)
(72) Inventor: Huber, Birgit, 6300 Zug (CH); Kränzlin-Meier, Heinrich, 8835 Feusisberg (CH); Schumacher, Benedikt, 8623 Wetzikon (CH); Yang, Dantong, 6300 Zug (CH)
(74) Representative: Siemens Patent Attorneys

(56) References cited:
- US-B1- 10 049 088

## Description

The invention relates to a computer-implemented method for generating a building automation project of a building automation system and a corresponding device for generating a building automation project of a building automation system.

### State of the Art

Amongst the on-going efforts to reduce detrimental effects on the environment, so called "green building" tries to minimize the environmental impact and tries to increase the resource-efficiency throughout the entire life-cycle of the building, including planning, design and construction of the building, as well as operation, maintenance and the like. Green buildings typically accommodate building automation systems, BAS, which can manage resources in a very efficient way.

Modern building automation systems aim to provide a completely autonomous control of electronic or mechanical devices of a facility or building. Electronic and mechanical devices to be controlled by the automation system comprise heating, ventilation and air conditioning, HVAC, equipment which provide thermal comfort and good air quality. HVAC equipment can comprise temperature or humidity sensors distributed in the rooms of the building or facility which provide sensor data. Based on the sensor data, control systems control field devices, such as valves, heaters, ventilation systems, air conditioner, air filter and the like. In addition to HVAC equipment, electronic or mechanical devices of the facility or building to be controlled may comprise security systems, fire alarm systems, lighting systems or various mechanical components, e.g. blinds.

The building automation process includes a planning stage where input is received from various different sources. The input may include architectural drawings, plant diagrams and functional specifications in different file formats. Based on these resources, a preliminary technical concept is created. At the next stage, the preliminary technical concept is processed and a detailed design is created, comprising devices (such as field devices, controllers and IoT devices) network topology, electrical drawings, applications and detailed technical drawings. The detailed concept is then implemented and configured using software tools. A building automation project is created.

Accordingly, the processes from the initial input up to the final building automation project is relatively complex and involves interplay and coordination of different experts with different backgrounds. At each stage, information may be present in different file formats, often without any consistent or uniform description or documentation. For example, changes or modifications may require tedious adaptations at each stage. Moreover, previous work and experiences can typically not be sufficiently taken into account for other projects. In other words, for each new project, all tasks have to be started over from scratch, which requires lots of work, time and resources.

Document US 10049088 discloses a system which is configured with a description of a building automation project, including attributes of the structure itself as well as the locations and configurations of the devices.

It is therefore an object of the present invention to provide a simpler and generally applicable way to provide building automation projects.

### Summary of the Invention

The invention is defined by the independent claims.

Advantageous embodiments are set out in the dependent claims.

According to the invention, expressions like "generate" "extend", "extract", "compute", "determine", and the like, preferably refer to methods, processes or process steps that change, generate or transform data that is provided in a computer-readable form. Said methods, processes or process steps are performed at least partially and preferably completely automatically, i.e. by a computing unit. According to the invention, a "computing unit" may comprise any electronic device adapted to perform data processing methods, such as personal computers, server, handheld devices, mobile devices and other communication devices. The computing unit may comprise a plurality of single units, like hardware interfaces, communication controllers, processors and the like. The processing unit can comprise at least one of a central processing unit (CPU) or graphics processing unit (GPU), like a microcontroller (pC), an integrated circuit (IC), an application-specific integrated circuit (ASIC), an application-specific standard product (ASSP), a digital signal processor (DSP), a field programmable gate array (FPGA) and the like.

According to the invention, a "database" may be any organized collection of data, stored on a memory and accessible by the computing unit. The computing unit may be adapted to retrieve data from the database and/or to modify entries in the database.

According to the invention, a "memory" may be any volatile and/or non-volatile data memory, e.g. a solid-state disk, memory card, compact disc, and the like.

According to the invention, an "interface" can be arranged as both an input unit and an output unit and may comprise any kind of port or link or interface capable of communicating information to another system, e.g. WLAN, Bluetooth, ZigBee, Profibus, ETHERNET etc.

According to the invention, "computer-implemented method" can mean that at least one step of the method is performed by a computing unit.

According to the invention, "building automation" may refer to an automatic and preferably centralized control of electronic and/or mechanical devices arranged in a building or facility.

According to the invention, a "building automation system", BAS, relates to a computer-based control system to be installed in a building or facility and being adapted to control mechanical and/or electrical equipment of the building or facility. The building automation system may comprise both hardware and software components. The software components may be configured in a hierarchical manner and may communicate via protocols, e.g. BACnet, or any other IP-based protocol, Profibus, Modbus, KNX, and the like.

According to the invention, "building equipment" refers to electronic and mechanical devices to be controlled by the automation system and may comprise at least one of heating, ventilation and air conditioning, HVAC, equipment, security systems (such as closed-circuit television, CCTV, and motion detectors), fire alarm systems, lighting systems, access control, blinds, lifts, elevators, plumbing, disaster-response mechanisms, and the like.

According to the invention, "structural information" may comprise any input data available during early phases of the automation process, e.g. during the planning stage.

According to the invention, "equipment information" may comprise information regarding the number, type and connections of building equipment.

According to the invention, "application information" may comprise information for controlling or operating building equipment. For example, application information may comprise instructions or routines to be processed by controller that control the building equipment.

According to the invention, a "semantic model" or "semantic data model" may refer to a semantics-based database description and structuring formalism for databases. A semantic model may describe physical or abstract entities, in particular the building equipment, building structure and the applications. In addition, semantic information is assigned to the entities which provide a description or meaning of the entities. A semantic model may refer to a conceptual data model including such semantic information.

According to the invention, an "extended semantic model" refers to an extension of the semantic model by providing additional data or information.

According to the invention, a "building automation project" may refer to a program for configuring building equipment, applications and the like. A user may control the building automation project via a graphic user interface. The building automation project may further provide data such as functional specifications, bill of material, cost or information regarding the semantic model or extended semantic model.

According to the invention, a "building automation device" may refer to any device comprising hardware and/or software components which presents the building automation project to a user. The building automation device may comprise a graphic user interface outputting data related to the building automation project to the user. The building automation device may further comprise an interface for receiving control signals from a user, e.g. a keyboard, mouse, touchscreen, buttons, switches and the like.

An underlying idea of the present invention is to provide an automatic method for providing building automation projects. Required manual input by experts is to be reduced as much as possible. Provided structural information is automatically processed by modern data processing algorithms, e.g. computer vision methods, machine learning or data fusion, to generate a semantic model. The semantic model generated by such highly sophisticated methods and algorithms is further enhanced to provide both equipment information and application information. Based on the extended semantic model, the building automation project is automatically generated. A result is a much higher efficiency, and a big reduction in cost and engineering faults in building automation projects.

According to a preferred embodiment of the computer-implemented method, the structural information regarding the building equipment comprises at least one of
an architectural drawing,
a heating, ventilation and air conditioning, HVAC, schema,
an electrical schema,
technical drawings, and
a functional specification.

The architectural drawings may describe building equipment and may in particular comprise the specific relative arrangement or topology of the building equipment layout (e.g. the floorplan) and of the building equipment.

According to a preferred embodiment of the computer-implemented method, structural information from different data sources can be processed by the computing unit. For example, the structural data may be provided in different file formats, e.g..pdf, .dwg, .xls, .doc, .txt formats and the like.

According to a preferred embodiment of the computer-implemented method, the equipment information of the semantic model of the building automation system comprises at least one of:
an architecture semantic model generated based on the architectural drawing,
an HVAC semantic model generated based on the HVAC schema, and
an electrical semantic model generated based on the electrical schema.

The semantic model of the building automation system may be divided into several semantic models. The respective semantic model may comprise semantic data describing the respective entities. For example, the architecture semantic model may comprise semantic information describing the type or specifications of the building equipment and the layout described by the architectural drawing. The HVAC semantic model may comprise semantic information describing the type or specifications of the HVAC components described by the HVAC schema. Further, the electrical semantic model may comprise semantic information describing the type or specifications of the electrical components described by the electrical schema. The semantic information may be determined based on an analysis of the respective structural information and may further be based on data stored in a database.

According to a preferred embodiment of the computer-implemented method, the step of automatically extracting equipment information from the structural information regarding the building equipment comprises at least one of applying computer vision methods to the structural information regarding the building equipment, and applying data fusion methods to the structural information regarding the building equipment. According to some embodiments, the semantic model may also be generated based on machine learning procedures. Accordingly, the semantic model is generated automatically with none or only minimal input required by experts.

According to a preferred embodiment of the computer-implemented method, the step of automatically extracting equipment information from the structural information regarding the building equipment comprises specifying a type of building equipment and/or relations of the building equipment. Together with the type of equipment, information regarding specifications of the equipment may be provided.

According to a preferred embodiment of the computer-implemented method, the step of providing application information comprises specifying a type of applications corresponding to the building equipment and/or relations between the applications corresponding to the building equipment. Examples for applications may comprise applications for operating controller for controlling the building equipment. The type of applications may refer to specific protocols or types of the respective controller. The type of application may be determined based on the type of the corresponding building equipment.

According to a preferred embodiment of the computer-implemented method, extending the semantic model of the building automation system further includes selecting building equipment and/or controller from a database. Selecting the building equipment and/or controller may be based on information present in the semantic model, e.g. types, numbers and/or specifications of building equipment specified in the semantic model.

According to a preferred embodiment of the computer-implemented method, the semantic model of the building automation system further includes counting data points based on the HVAC semantic model, wherein the building equipment and/or controller are selected based on the counted data points. Data points may correspond to specific sensors or actuators. To each data point, there can be assigned an IP address. The total number of data points may restrict the applicable controller and accordingly the possible applications.

According to a preferred embodiment of the computer-implemented method, extending the semantic model of the building automation system further includes providing protocol type information, wherein the step of selecting building equipment and/or controller is based on the provided protocol type information. For example, different controller may only support specific protocol types. Depending on the protocol type information, a suitable controller is selected.

According to a preferred embodiment of the computer-implemented method, extending the semantic model of the building automation system further includes providing a design network topology based on information stored in a database. The design network topology may describe the way the controller and building equipment are connected. According to a preferred embodiment of the computer-implemented method, generating the building automation project comprises providing at least one of:
building structure information,
network information,
controller information,
input/output module information,
management station information,
field device information, and
application information.

For example, the input/output module information may be determined based on the counted number of data points. The management station information may relate to information regarding a specific device that allows a facility manager to operate parameters of the building automation system, such as a personal computer or handheld device.

According to a preferred embodiment, the computer-implemented method further comprises the step of loading the generated building automation project on the building automation device and adjusting equipment and/or controller of the building automation system by the building automation device, using the generated building automation project. For example, specific control parameters may be adjusted based on information provided by the building automation project.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts. It should be understood that method steps are numbered for easier reference but that said numbering does not necessarily imply steps being performed in that order unless explicitly or implicitly described otherwise. In particular, steps may also be performed in a different order than indicated by their numbering. Some steps may be performed simultaneously or in an overlapping manner.
- Fig. 1: schematically shows a block diagram illustrating a device for generating a building automation project of a building automation system according to an embodiment of the invention;
- Fig. 2: schematically shows a block diagram illustrating the generation of the building automation project starting from structural information;
- Fig. 3: schematically shows a flow diagram of a computer-implemented method for generating a building automation project of a building automation system according to an embodiment of the invention;
- Fig. 4: schematically illustrates a block diagram illustrating a computer program product according to an embodiment of the invention; and
- Fig. 5: schematically illustrates a block diagram illustrating a non-transitory, computer-readable storage medium according to an embodiment of the invention.

### Detailed description of the invention

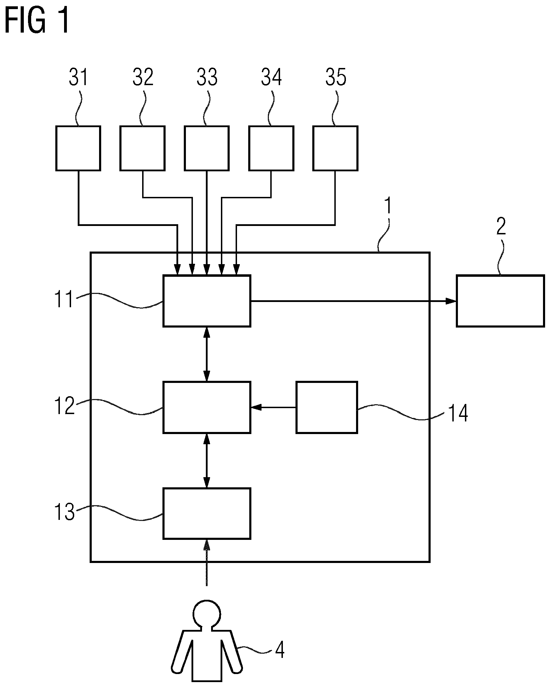

Figure 1 shows a block diagram illustrating a device 1 for generating a building automation project of a building automation system. The device 1 comprises an interface 11 adapted to retrieve structural information. The interface 11 may communicate via any type of wireless communication or via electrical or optical means. The interface 11 may be connected to a central server for retrieving the structural information regarding building equipment to be controlled by a building automation system.

The structural information obtained via the interface 11 comprises an architectural drawing 31, a heating, ventilation and air conditioning, HVAC, schema 32, an electrical schema 33, technical drawings 34, and functional specifications 35. The structural information 31 to 35 may be at least partially provided in different file formats, comprising, e.g., .pdf, .dwg, .xls, .doc, .txt formats and the like. According to other embodiments, the structural information 31 to 35 is converted to a uniform file format prior to providing the structural information to the interface 11 of the device 1.

The device 1 further comprises a computing unit 12 which is connected to the interface 11 and has access to a database 14 stored in a memory of the device 1. The computing unit 12 receives and further processes the structural information retrieved by the interface 11.

The computing unit 12 generates a semantic model of the building automation system by extracting equipment information from the structural information regarding the building equipment. The semantic model may comprise an architecture semantic model, an HVAC semantic model, and an electrical semantic model. Generating the semantic model may comprise the application of computer vision methods to the structural information provided to the device 1 via the interface 11. Further, data fusion methods or machine learning methods may be applied to the structural information regarding the building equipment by the computing unit 12. Extracting equipment information from the structural information may further comprise the specification of a type of the building equipment and/or the specification of relations of the building equipment among each other.

The computing unit 12 is further adapted to extend the generated semantic model of the building automation system by providing additional application information. Extending the semantic model may comprise specifying a type of applications corresponding to building equipment, e.g. for controlling building equipment. The applications may be loaded onto control devices for controlling the building equipment. Providing application information may further comprise specifying relations between the applications corresponding to the building equipment. Accordingly, application information may specify the interplay or interoperability of different control devices or control system components or subroutines.

The computing unit 12 further extends the semantic model of the building automation system by selecting building equipment, e.g. field devices, and/or controller specified in a database 14 of said device 1 for generating a building automation project.

The computing unit 12 may further be adapted to extend the semantic model of the building automation system by counting data points based on the HVAC semantic model. In particular, the computing unit 12 may determine the building equipment and/or controller to be selected based on the counted data points. For instance, the database 14 may comprise relations between data points and respective building equipment and/or controller. Based on these relations, the computing units 12 selects suitable building equipment and/or controller.

The computing unit 12 may further extend the semantic model of the building automation system by including protocol type information. The building equipment and/or controller may be based on the provided protocol type information. Generally, each controller or field device may be adapted to interact according to one or more specific protocol types.

The computing unit 12 may further extend the semantic model of the building automation system by providing a design network topology based on information stored in the database 14.

Further, the computing unit 12 generates a building automation project based on the equipment information and application information implemented in the extended semantic model of the building automation system. The computing unit 12 may provide building structure information of the building automation system, e.g. types and specifications of building equipment. The building automation project may further include network information, controller information, input/output module information, management station information, field device information, and/or application information.

The computing unit 12 can provide the generated building automation project to an external building automation device 2 via the interface 11. According to further embodiments, the device 1 may also be part of the building automation device 2. The building automation device 2 may be adapted to adjust parameters of building equipment and/or of controller of the building.

The device 1 further comprises a user interface 13 for retrieving control signals from a user 4. The user 4 may provide additional information. For example, the user may provide an IP address range, protocol type, dimensioning data (e.g. the size of valves, pipes, and the like), equipment type or project info. In particular, for some projects, additional input from a user 4 may be required to provide the extended semantic model. Accordingly, the user 4 may provide additional labels via the user interface 13. For example, the structural information may comprise unknown symbols or labels which cannot be automatically analyzed by the computing unit 12. The user 4 may manually provide this additional data.

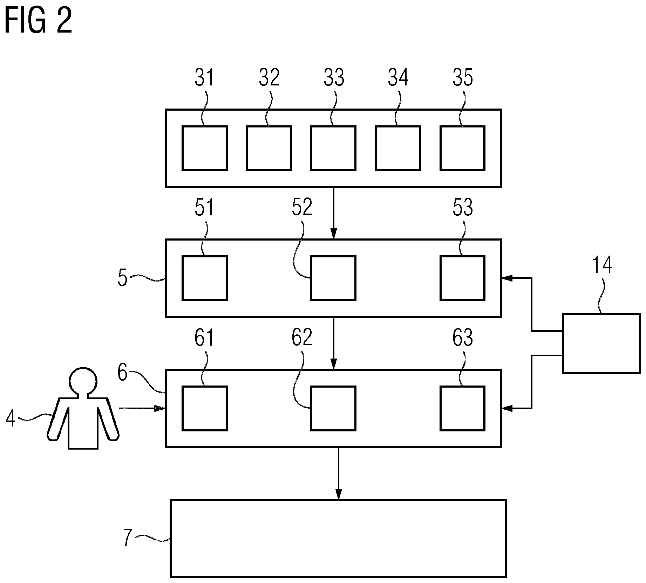

Figure 2 shows a block diagram illustrating the generation of the building automation project. Structural information, including an architectural drawing 31, a HVAC schema 32, an electrical schema 33, technical drawings 34, and a functional specification 35 is automatically processed in order to determine a semantic model 5, comprising an architecture semantic model 51, an HVAC semantic model 52, and an electrical semantic model 53. The semantic model 5 is further enhanced to provide an extended semantic model 6, comprising an extended architecture semantic model 61, and extended HVAC semantic model 62, and an extended electrical semantic model 63. For providing the extended electrical semantic model 63, a user 4 may provide additional data, such as missing labels or semantic information. Further, for providing the semantic model 5, including equipment information, and the extended semantic model 6, including application information, data provided in a database 14 stored in a memory can be used. The data provided in the database may comprise lookup tables which provide semantic labels for specific identified building equipment.

Based on the extended semantic model 6, a building automation project 7 is generated by the computing unit 12.

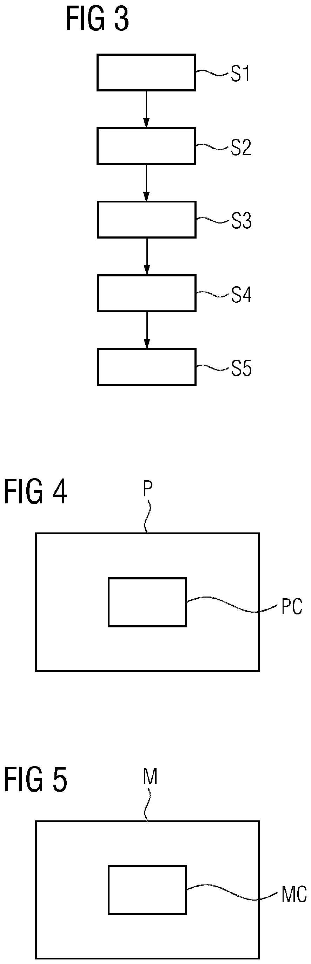

Figure 3 shows a flow diagram of a computer-implemented method for generating a building automation project of a building automation system.

In a first method step S1, structural information regarding a building is provided via an interface 11. As described above, the structural information may comprise an architectural drawing 31, a HVAC schema 32, an electrical schema 33, technical drawings 34, and functional specifications 35.

In a second method step S2, a semantic model 5 of the building automation system is automatically generated, comprising the equipment information extracted from the structural information. The semantic model 5 may comprise several sub-models, such as an architecture semantic model 51, an HVAC semantic model 52, and an electrical semantic model 53.

For extracting the equipment information, at least one of computer vision methods, data fusion methods and machine learning methods may be applied. In particular, types, numbers and specifications of equipment building may be automatically extracted from the structural information.

In a third method step S3, the semantic model 5 is extended by providing application information. The type of applications corresponding to the building equipment and/or relations between the applications corresponding to the building equipment may be determined. Further, building devices and/or controller of the building automation system may be selected from a database 14. Further, data points may be counted based on the HVAC semantic model and the building equipment and/or controller may be selected based on the counted data points. Further, protocol type information may be provided, and the building equipment and/or controller are selected based on the provided protocol type information.

In a fourth method step S4, a building automation project is generated based on the equipment information and the application information of the extended semantic model.

In a fifth method step S5, the generated building automation project 7 is loaded on a building automation device 2. Building equipment and/or controller may be adjusted or controlled by the building automation device 2 based on the building automation project 7.

Figure 4 illustrates a block diagram illustrating a computer program product P comprising executable program code PC. The executable program code PC is configured to perform, when executed (e.g. by a computing unit 12), the method according to the first aspect.

Figure 5 schematically illustrates a block diagram illustrating a non-transitory, computer-readable storage medium M comprising executable program code MC configured to, when executed (e.g. by a computing device), perform the method according to the first aspect.

It should be understood that all advantageous options, variance in modifications described herein and the foregoing with respect to embodiments of the method according to the first aspect may be equally applied to embodiments of the device according to the second aspect, and vice versa.

In the foregoing detailed description, various features are grouped together in one or more examples for the purpose of streamlining the disclosure. It is to be understood that the above description is intended to be illustrative, and not restrictive. It is intended to cover alternatives, modifications and equivalents. Many other examples will be apparent to one skilled in the art upon reviewing the above specification.

### List of Reference Signs

- 1: device for generating a building automation project
- 2: building automation device
- 4: user
- 5: semantic model
- 6: extended semantic model
- 7: building automation project
- 11: interface
- 12: computing unit
- 13: user interface
- 14: database
- 31: architecture schema
- 32: HVAC schema
- 33: electrical schema
- 34: technical drawing
- 35: tender text
- 51: architecture semantic model
- 52: HVAC semantic model
- 53: electrical semantic model
- 61: extended architecture semantic model
- 62: extended HVAC semantic model
- 63: extended electrical semantic model
- M: storage medium
- MC: program code
- P: computer program product
- PC: program code
- S1: first method step
- S2: second method step
- S3: third method step
- S4: fourth method step
- S5: fifth method step

## Claims

1. A computer-implemented method for generating a building automation project (7) of a building automation system, BAS, comprising the steps:
receiving (S1), via an interface (11), structural information (31, 32, 33, 34, 35) regarding building equipment, wherein the structural information comprises input data available during a planning stage of a building automation process;
generating (S2) a semantic model (5) of the building automation system, comprising the step of automatically extracting equipment information from the structural information (31, 32, 33, 34, 35) regarding the building equipment, wherein the step of automatically extracting equipment information from the structural information (31, 32, 33, 34, 35) regarding the building equipment comprises specifying a type of building equipment and/or relations of the building equipment;
extending (S3) the semantic model (5) of the building automation system by providing application information, wherein the step of providing application information comprises specifying a type of applications corresponding to the type of building equipment and/or the relations of the building equipment; and
generating (S4), based on the equipment information and application information of the extended semantic model (6) of the building automation system, a building automation project (7) adapted for loading on a building automation device (2) which presents the building automation project (7) to a user.

2. The method according to claim 1, wherein the structural information (31, 32, 33, 34, 35) regarding building equipment comprises at least one of
an architectural drawing (31),
a heating, ventilation and air conditioning, HVAC, schema (32),
an electrical schema (33),
technical drawings (34), and
a functional specification (35).

3. The method according to claim 2, wherein the equipment information of the semantic model (5) of the building automation system comprises at least one of:
an architecture semantic model (51) generated based on the architectural drawing (31),
an HVAC semantic model (52) generated based on the HVAC schema (32), and
an electrical semantic model (53) generated based on the electrical schema (33).

4. The method according to any of the preceding claims, wherein the step of automatically extracting equipment information from the structural information (31, 32, 33, 34, 35) regarding the building equipment comprises at least one of applying computer vision methods to the structural information (31, 32, 33, 34, 35) regarding the building equipment, and applying data fusion methods to the structural information (31, 32, 33, 34, 35) regarding the building equipment.

5. The method according to any of the preceding claims, wherein extending the semantic model (5) of the building automation system further includes selecting building equipment and/or controller from a database (14).

6. The method according to claim 5, wherein extending the semantic model (5) of the building automation system further includes counting data points based on an HVAC semantic model (52) generated based on an HVAC schema (32), and wherein the building equipment and/or controller are selected based on the counted data points.

7. The method according to any of the preceding claims, wherein extending the semantic model (5) of the building automation system further includes providing protocol type information, and wherein the step of selecting building equipment and/or controller is based on the provided protocol type information.

8. The method according to any of the preceding claims, wherein extending the semantic model (5) of the building automation system further includes providing a design network topology based on information stored in a database (14).

9. The method according to any of the preceding claims, wherein generating the building automation project (7) comprises providing at least one of:
building structure information,
network information,
controller information,
input/output module information,
management station information,
field device information, and
application information.

10. The method according to any of the preceding claims, further comprising the step of loading (S5) the generated building automation project (7) on the building automation device (2) and adjusting building equipment and/or controller by the building automation device (2), using the generated building automation project (7).

11. A device for generating a building automation project (7) of a building automation system, BAS, comprising:
an interface (11) adapted to receive structural information (31, 32, 33, 34, 35) regarding building equipment, wherein the structural information comprises input data available during a planning stage of a building automation process; and
a computing unit (12) adapted:
- to generate a semantic model (5) of the building automation system, comprising the step of automatically extracting equipment information from the structural information (31, 32, 33, 34, 35) regarding the building equipment, wherein the step of automatically extracting equipment information from the structural information (31, 32, 33, 34, 35) regarding the building equipment comprises specifying a type of building equipment and/or relations of the building equipment,
- to extend the semantic model (5) of the building automation system by providing application information which comprises specifying a type of applications corresponding to the type of building equipment and/or the relations of the building equipment, and
- to generate, based on the equipment information and application information of the extended semantic model (6) of the building automation system, a building automation project (7) ;
wherein the computing unit (12) is further adapted to provide the generated building automation project (7) to a building automation device (2) via the interface (11) which building automation device (2) presents the building automation project (7) to a user.

12. Computer program product (P) comprising executable program code (PC) configured to, when executed by a computing device, perform the method according to any of claims 1 to 10.

13. Non-transitory, computer-readable storage medium (M) comprising executable program code (MC) configured to, when executed by a computing device, perform the method according to any of claims 1 to 10.

## Patentansprüche

1. Computerimplementiertes Verfahren zum Erstellen eines Gebäudeautomationsprojekts (7) eines Gebäudeautomationssystems GAS mit folgenden Schritten:
Empfangen (S1) von baulichen Informationen (31, 32, 33, 34, 35) zur Gebäudetechnik über eine Schnittstelle (11), wobei die baulichen Informationen Eingabedaten umfassen, die in einem Planungsstadium eines Gebäudeautomationsprozesses zur Verfügung stehen,
Erstellen (S2) eines semantischen Modells (5) des Gebäudeautomationssystems, das das automatische Gewinnen von technischen Informationen aus den baulichen Informationen (31, 32, 33, 34, 35) zur Gebäudetechnik umfasst, wobei das automatische Gewinnen von technischen Informationen aus den baulichen Informationen (31, 32, 33, 34, 35) zur Gebäudetechnik das Angeben eines Typs Gebäudetechnik und/oder von Zusammenhängen bei der Gebäudetechnik umfasst,
Erweitern (S3) des semantischen Modells (5) des Gebäudeautomationssystems durch Bereitstellen von Informationen zur Anwendung, wobei das Bereitstellen von Informationen zur Anwendung das Angeben eines Typs Anwendungen umfasst, der dem Typ Gebäudetechnik und/oder den Zusammenhängen bei der Gebäudetechnik entspricht, und
Erstellen (S4) eines Gebäudeautomationsprojekts (7), das zum Laden auf eine Gebäudeautomationsvorrichtung (2) ausgelegt ist, die das Gebäudeautomationsprojekt (7) einem Benutzer präsentiert, auf der Grundlage der technischen Informationen und der Informationen zur Anwendung aus dem erweiterten semantischen Modell (6) des Gebäudeautomationssystems.

2. Verfahren nach Anspruch 1, wobei die baulichen Informationen (31, 32, 33, 34, 35) zur Gebäudetechnik zumindest
eine Bauzeichnung (31),
eine Übersicht über Heizung, Lüftung und Klimatisierung HLK (32),
eine Übersicht über die Elektrik (33),
technische Zeichnungen (34) und/oder
ein Pflichtenheft (35) umfassen.

3. Verfahren nach Anspruch 2, wobei die technischen Informationen aus dem semantischen Modell (5) des Gebäudeautomationssystems zumindest:
ein auf der Grundlage der Bauzeichnung (31) erstelltes semantisches Architekturmodell (51),
ein auf der Grundlage der HLK-Übersicht (32) erstelltes semantisches HLK-Modell (52) und/oder
ein auf der Grundlage der Übersicht über die Elektrik (33) erstelltes semantisches Elektrikmodell (53) umfassen.

4. Verfahren nach einem der vorhergehenden Ansprüche, wobei das automatische Gewinnen von technischen Informationen aus den baulichen Informationen (31, 32, 33, 34, 35) zur Gebäudetechnik das Anwenden von Computer-Vision-Verfahren auf die baulichen Informationen (31, 32, 33, 34, 35) zur Gebäudetechnik und/oder das Anwenden von Datenfusionsverfahren auf die baulichen Informationen (31, 32, 33, 34, 35) zur Gebäudetechnik umfasst.

5. Verfahren nach einem der vorhergehenden Ansprüche, wobei das Erweitern des semantischen Modells (5) des Gebäudeautomationssystems ferner das Auswählen von Gebäudetechnik und/oder einer Steuerung aus einer Datenbank (14) umfasst.

6. Verfahren nach Anspruch 5, wobei das Erweitern des semantischen Modells (5) des Gebäudeautomationssystems ferner das Zählen von Datenpunkten auf der Grundlage eines auf der Grundlage einer HLK-Übersicht (32) erstellten semantischen HLK-Modells (52) umfasst und die Gebäudetechnik und/oder die Steuerung auf der Grundlage der gezählten Datenpunkte ausgewählt wird.

7. Verfahren nach einem der vorhergehenden Ansprüche, wobei das Erweitern des semantischen Modells (5) des Gebäudeautomationssystems ferner das Bereitstellen von Informationen zum Protokolltyp umfasst und das Auswählen von Gebäudetechnik und/oder einer Steuerung auf den bereitgestellten Informationen zum Protokolltyp basiert.

8. Verfahren nach einem der vorhergehenden Ansprüche, wobei das Erweitern des semantischen Modells (5) des Gebäudeautomationssystems ferner das Bereitstellen einer Netzwerktopologie auf der Grundlage von in einer Datenbank (14) gespeicherten Informationen umfasst.

9. Verfahren nach einem der vorhergehenden Ansprüche, wobei das Erstellen des Gebäudeautomationsprojekts (7) das Bereitstellen von:
Informationen zur Baustruktur,
Informationen zum Netzwerk,
Informationen zur Steuerung,
Informationen zum Eingabe-/Ausgabe-Modul,
Informationen zur Leitstation,
Informationen zum Feldgerät und/oder
Informationen zur Anwendung umfasst.

10. Verfahren nach einem der vorhergehenden Ansprüche, das ferner das Laden (S5) des erstellten Gebäudeautomationsprojekts (7) auf die Gebäudeautomationsvorrichtung (2) und das Anpassen der Gebäudetechnik und/oder der Steuerung durch die Gebäudeautomationsvorrichtung (2) unter Verwendung des erstellten Gebäudeautomationsprojekts (7) umfasst.

11. Vorrichtung zum Erstellen eines Gebäudeautomationsprojekts (7) eines Gebäudeautomationssystems GAS, die Folgendes umfasst:
eine Schnittstelle (11), die zum Empfangen von baulichen Informationen (31, 32, 33, 34, 35) zur Gebäudetechnik ausgelegt ist, wobei die baulichen Informationen Eingabedaten umfassen, die in einem Planungsstadium eines Gebäudeautomationsprozesses zur Verfügung stehen, und
eine Recheneinheit (12), die so ausgelegt ist, dass sie:
- ein semantisches Modell (5) des Gebäudeautomationssystems erstellt, das das automatische Gewinnen von technischen Informationen aus den baulichen Informationen (31, 32, 33, 34, 35) zur Gebäudetechnik umfasst, wobei das automatische Gewinnen von technischen Informationen aus den baulichen Informationen (31, 32, 33, 34, 35) zur Gebäudetechnik das Angeben eines Typs Gebäudetechnik und/oder von Zusammenhängen bei der Gebäudetechnik umfasst,
- das semantische Modell (5) des Gebäudeautomationssystems durch Bereitstellen von Informationen zur Anwendung erweitert, was das Angeben eines Typs Anwendungen umfasst, der dem Typ Gebäudetechnik und/oder den Zusammenhängen bei der Gebäudetechnik entspricht, und
- auf der Grundlage der technischen Informationen und der Informationen zur Anwendung aus dem erweiterten semantischen Modell (6) des Gebäudeautomationssystems ein Gebäudeautomationsprojekt (7) erstellt,
wobei die Recheneinheit (12) ferner so ausgelegt ist, dass sie das erstellte Gebäudeautomationsprojekt (7) über die Schnittstelle (11) für eine Gebäudeautomationsvorrichtung (2) bereitstellt, die das Gebäudeautomationsprojekt (7) einem Benutzer präsentiert.

12. Computerprogrammprodukt (P) mit ausführbarem Programmcode (PC), der so konfiguriert ist, dass er, wenn er von einer Rechenvorrichtung ausgeführt wird, das Verfahren nach einem der Ansprüche 1 bis 10 durchführt.

13. Nichtflüchtiges, computerlesbares Speichermedium (M) mit ausführbarem Programmcode (MC), der so konfiguriert ist, dass er, wenn er von einer Rechenvorrichtung ausgeführt wird, das Verfahren nach einem der Ansprüche 1 bis 10 durchführt.

## Revendications

1. Procédé mis en œuvre par ordinateur pour générer un projet d'automatisation de bâtiment (7) d'un système d'automatisation de bâtiment, BAS, comprenant les étapes consistant à :
recevoir (S1), via une interface (11), des informations structurelles (31, 32, 33, 34, 35) concernant l'équipement de bâtiment, dans lequel les informations structurelles comprennent des données d'entrée disponibles au cours d'une phase de planification d'un processus d'automatisation de bâtiment ;
générer (S2) un modèle sémantique (5) du système d'automatisation de bâtiment, comprenant l'étape d'extraction automatique des informations sur l'équipement à partir des informations structurelles (31, 32, 33, 34, 35) concernant l'équipement de bâtiment, dans lequel l'étape d'extraction automatique des informations sur l'équipement à partir des informations structurelles (31, 32, 33, 34, 35) concernant l'équipement de bâtiment comprend la spécification d'un type d'équipement de bâtiment et/ou des relations de l'équipement de bâtiment ;
étendre (S3) le modèle sémantique (5) du système d'automatisation de bâtiment en fournissant des informations sur les applications, dans lequel l'étape consistant à fournir des informations sur les applications comprend la spécification d'un type d'applications correspondant au type d'équipement de bâtiment et/ou aux relations de l'équipement de bâtiment ; et
générer (S4), sur la base des informations sur les équipements et des informations sur les applications du modèle sémantique étendu (6) du système d'automatisation de bâtiment, un projet d'automatisation de bâtiment (7) adapté pour être chargé sur un dispositif d'automatisation de bâtiment (2) qui présente le projet d'automatisation de bâtiment (7) à un utilisateur.

2. Procédé selon la revendication 1, dans lequel les informations structurelles (31, 32, 33, 34, 35) concernant l'équipement de bâtiment comprennent au moins un parmi :
un dessin architectural (31),
un schéma de chauffage, ventilation et climatisation, CVC (32),
un schéma électrique (33),
des dessins techniques (34), et
une spécification fonctionnelle (35).

3. Procédé selon la revendication 2, dans lequel les informations sur les équipements du modèle sémantique (5) du système d'automatisation de bâtiment comprennent au moins l'un parmi :
un modèle sémantique d'architecture (51) généré sur la base du dessin architectural (31),
un modèle sémantique CVC (52) généré sur la base du schéma CVC (32), et
un modèle sémantique électrique (53) généré sur la base du schéma électrique (33).

4. Procédé selon l'une quelconque des revendications précédentes, dans lequel l'étape d'extraction automatique des informations sur l'équipement à partir des informations structurelles (31, 32, 33, 34, 35) concernant l'équipement de bâtiment comprend au moins l'une parmi l'application de procédés de vision par ordinateur aux informations structurelles (31, 32, 33, 34, 35) concernant l'équipement de bâtiment, et l'application de procédés de fusion de données aux informations structurelles (31, 32, 33, 34, 35) concernant l'équipement de bâtiment.

5. Procédé selon l'une quelconque des revendications précédentes, dans lequel l'extension du modèle sémantique (5) du système d'automatisation de bâtiment inclut en outre la sélection d'un équipement de bâtiment et/ou d'un contrôleur à partir d'une base de données (14).

6. Procédé selon la revendication 5, dans lequel l'extension du modèle sémantique (5) du système d'automatisation de bâtiment inclut en outre le comptage des points de données sur la base d'un modèle sémantique CVC (52) généré sur la base d'un schéma CVC (32), et dans lequel l'équipement de bâtiment et/ou le contrôleur sont sélectionnés sur la base des points de données comptés.

7. Procédé selon l'une quelconque des revendications précédentes, dans lequel l'extension du modèle sémantique (5) du système d'automatisation de bâtiment inclut en outre la fourniture d'informations sur le type de protocole, et dans lequel l'étape de sélection de l'équipement de bâtiment et/ou du contrôleur est basée sur les informations fournies sur le type de protocole.

8. Procédé selon l'une quelconque des revendications précédentes, dans lequel l'extension du modèle sémantique (5) du système d'automatisation de bâtiment inclut en outre la fourniture d'une topologie de réseau de conception basée sur des informations stockées dans une base de données (14).

9. Procédé selon l'une quelconque des revendications précédentes, dans lequel la génération du projet d'automatisation de bâtiment (7) comprend la fourniture d'au moins un parmi :
des informations sur la structure du bâtiment,
des informations sur le réseau,
des informations sur le contrôleur,
des informations sur le module d'entrée/sortie,
des informations sur la station de gestion,
des informations sur le dispositif de terrain, et
des informations relatives à l'application.

10. Procédé selon l'une quelconque des revendications précédentes, comprenant en outre l'étape de chargement (S5) du projet d'automatisation de bâtiment (7) généré sur le dispositif d'automatisation de bâtiment (2) et le réglage de l'équipement de bâtiment et/ou du contrôleur par le dispositif d'automatisation de bâtiment (2), en utilisant le projet d'automatisation de bâtiment (7) généré.

11. Dispositif pour générer un projet d'automatisation de bâtiment (7) d'un système d'automatisation de bâtiment, BAS, comprenant :
une interface (11) adaptée pour recevoir des informations structurelles (31, 32, 33, 34, 35) concernant l'équipement de bâtiment, dans lequel les informations structurelles comprennent des données d'entrée disponibles au cours d'une phase de planification d'un processus d'automatisation de bâtiment ; et
une unité de calcul (12) adaptée:
- pour générer un modèle sémantique (5) du système d'automatisation de bâtiment, comprenant l'étape d'extraction automatique des informations sur l'équipement à partir des informations structurelles (31, 32, 33, 34, 35) concernant l'équipement de bâtiment, dans lequel l'étape d'extraction automatique des informations sur l'équipement à partir des informations structurelles (31, 32, 33, 34, 35) concernant l'équipement de bâtiment comprend la spécification d'un type d'équipement de bâtiment et/ou des relations de l'équipement de bâtiment,
- pour étendre le modèle sémantique (5) du système d'automatisation de bâtiment en fournissant des informations sur les applications qui comprennent la spécification d'un type d'applications correspondant au type d'équipement de bâtiment et/ou aux relations de l'équipement de bâtiment, et
- pour générer, sur la base des informations sur l'équipement et des informations sur les applications du modèle sémantique étendu (6) du système d'automatisation de bâtiment, un projet d'automatisation de bâtiment (7) ;
dans lequel l'unité de calcul (12) est en outre adaptée pour fournir le projet d'automatisation de bâtiment (7) généré à un dispositif d'automatisation de bâtiment (2) via l'interface (11), lequel dispositif d'automatisation de bâtiment (2) présente le projet d'automatisation de bâtiment (7) à un utilisateur.

12. Produit de programme informatique (P) comprenant un code de programme exécutable (PC) configuré pour, lorsqu'il est exécuté par un dispositif informatique, mettre en œuvre le procédé selon l'une quelconque des revendications 1 à 10.

13. Support de stockage non transitoire, lisible par ordinateur (M) comprenant un code de programme exécutable (MC) configuré pour, lorsqu'il est exécuté par un dispositif informatique, mettre en œuvre le procédé selon l'une quelconque des revendications 1 à 10.
